# EUROPEAN PATENT APPLICATION

(11) **EP 2 039 426 A1**
(43) Date of publication of application: **25.03.2009**
(21) Application number: 07744332.3
(22) Date of filing: 29.05.2007
(51) Int. Cl.: B01J 23/89, B01D 53/94, B01J 23/58, B01J 32/00

(54) **EXHAUST GAS PURIFICATION CATALYST**

(30) Priority: 07.07.2006 JP 2006188257
(71) Applicant: Cataler Corporation, Kakegawa-shi Shizuoka 437-1492 (JP); Daihatsu Motor Co., Ltd., Ikeda-shi, Osaka 563-8651 (JP)
(72) Inventor: MATSUEDA, Satoshi, Kakegawa-shi, Shizuoka 437-1492, (JP); KIMURA, Mareo, Kakegawa-shi, Shizuoka 437-1492, (JP); HIRAI, Akimasa,, Kakegawa-shi, Shizuoka 437-1492, (JP); NARITA, Keiichi,, Kakegawa-shi, Shizuoka 437-1492, (JP); TANAKA, Hirohisa,, Ikeda-shi, Osaka 563-8651, (JP); TAN, Isao,, Ikeda-shi, Osaka 563-8651, (JP); UENISHI, Mari,, Ikeda-shi, Osaka 563-8651, (JP); TANIGUCHI, Masahi,, Ikeda-shi, Osaka 563-8651, (JP)
(74) Representative: Luderschmidt, Schüler & Partner
(86) International application number: PCT/JP2007/060913
(87) International publication number: WO 2008/004385

(57) **Abstract**

An exhaust gas-purifying catalyst is less prone to cause a decrease in its activity even when used in a high temperature atmosphere containing oxygen at a high concentration. The exhaust gas-purifying catalyst includes a composite oxide and Pd or a second solid solution of a composite and Rh and/or Pt. The first and second solid solutions have perovskite structure and are represented by ABO₃ and CDO₃, respectively. The composite oxide catalyst is supported by a composite oxide support including a composite oxide of spinel structure represented by EF₂O₄ or a composite oxide represented by GAl₁₂O₁₉. A and B represent a rare-earth element and a transition element, respectively. C and G represent an alkaline-earth element. D represents one or more of Ti, Zr, Hf and Ce. E represents an alkaline-earth element and/or a transition element. F represents one or more of Al, Mg and transition elements.

## Description

### Technical Field

The present invention relates to an exhaust gas-purifying catalyst.

### Background Art

As an exhaust gas-purifying catalyst that treats exhaust gas of an automobile, a three-way catalyst with precious metal such as platinum supported by an inorganic oxide such as ceria or alumina has been widely used. In the three-way catalyst, the precious metal plays the role in promoting the reduction of nitrogen oxides and the oxidations of carbon monoxide and hydrocarbons. Further, the inorganic oxide plays the roles in increasing the specific surface area of the precious metal and suppressing the sintering of the precious metal by dissipating heat generated by the reactions. In particular, ceria has an oxygen storage capacity and is capable of optimizing the oxidation and reduction reactions.

In recent years, occasions when the automotive vehicle such as automobile is driven at high-speed increase as the performance of an engine increases. Additionally, in order to prevent pollution of the air, the regulations on the exhaust gas are made more stringent. Against these backdrops, temperature of the exhaust gas emitted by the automotive vehicle is on the trend of rising.

Further, the automotive vehicle is required to decrease the carbon dioxide emission in order to suppress the global warming. For these reasons, occasions when the supply of fuel to the engine is cut off in the state that the exhaust gas-purifying catalyst is heated to high temperatures are increasing.

That is, the exhaust gas-purifying catalyst is used at temperatures higher than in the past, and occasions when exposed to an atmosphere excessive in oxygen at high temperatures are increasing. For that, in order to provide the exhaust gas-purifying catalyst that delivers a sufficient performance even when used under such a condition, research and development are actively carried out.

For example, JP-A 2004-41866 describes an exhaust gas-purifying catalyst containing a composite oxide having a perovskite structure represented by a general formula AB₁₋ₓPdₓO₃. In the general formula, the element A is at least one rare-earth element such as La, Nd and Y that exhibits a valence of three and cannot exhibit other valences. On the other hand, the element B is at least one element selected from the group consisting of Al and transition elements other than Co, Pd and rare-earth elements.

In the exhaust gas-purifying catalyst, the above composite oxide is usually used together with a refractory support. The present inventors have found in the course of achieving the present invention that an exhaust gas-purifying catalyst using the above composite oxide together with a support may fail to deliver a sufficient performance for a long period of time under the above-described use environments.

### Disclosure of Invention

An object of the present invention is to provide an exhaust gas-purifying catalyst that contains a composite oxide catalyst and a support and is less prone to cause a decrease in its activity even when used at high temperatures in an atmosphere whose oxygen concentration is high.

According to an aspect of the present invention, there is provided an exhaust gas-purifying catalyst comprising a composite oxide catalyst comprising a first solid solution of a composite oxide having a perovskite structure represented by a general formula ABO₃ and Pd or a second solid solution of a composite oxide having a perovskite structure represented by a general formula CDO₃ and Rh and/or Pt, and a composite oxide support supporting the composite oxide catalyst and comprising a first composite oxide having a spinel structure represented by a general formula EF₂O₄ or a second composite oxide represented by a general formula GAl₁₂O₁₉, wherein the element A represents a rare-earth element, the element B represents a transition element, the element C represents an alkaline-earth element, the element D represents at least one element selected from the group consisting of Ti, Zr, Hf and Ce, the element E represents an alkaline-earth element and/or a transition element, the element F represents at least one element selected from the group consisting of Al, Mg and transition elements, and the element G represents an alkaline-earth element.

### Brief Description of Drawings

FIG. 1 is a view schematically showing an exhaust gas-purifying catalyst according to first and second embodiments of the present invention;
FIG. 2 is a view schematically showing a state change that the exhaust gas-purifying catalyst shown in FIG. 1 exhibits under high temperature conditions;
FIG. 3 is a graph showing X-ray diffraction spectra of exhaust gas-purifying catalysts obtained after an endurance test; and
FIG. 4 is a graph showing X-ray diffraction spectra of exhaust gas-purifying catalysts obtained after an endurance test.

### Best Mode for Carrying Out the Invention

Embodiments of the present invention will be described below.

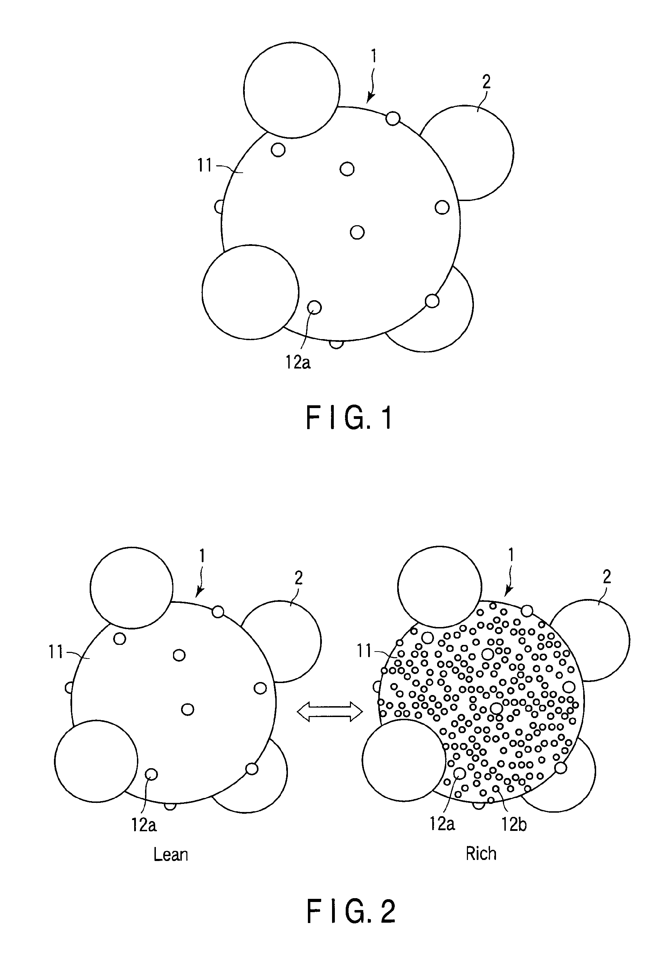

FIG. 1 is a view schematically showing an exhaust gas-purifying catalyst according to first and second embodiments of the present invention. The exhaust gas-purifying catalyst is a pellet catalyst formed by agglomerating a mixture of a particulate composite oxide catalyst 1 and a particulate refractory support 2, and a part thereof is shown in FIG. 1.

In the first embodiment, the composite oxide catalyst 1 includes a first solid solution of a composite oxide, which has a perovskite structure represented by a general formula ABO₃, and Pd. Typically, the composite oxide catalyst 1 includes a composite oxide 11 having a perovskite structure represented by a general formula AB₁₋ₓPdₓO₃. Further, the composite oxide 11 typically supports Pd as a precious metal 12a.

In the above general formula, the element A represents a rare-earth element, while the element B represents a transition element. The element A is, for example, at least one rare-earth element such as La, Nd and Y that exhibits a valence of three and cannot exhibit other valences. The element B is at least one element selected from the group consisting of Al and transition elements other than Co, Pd and rare-earth elements. The value x is greater than 0 and smaller than 1. The value is, for example, smaller than 0.5, and typically smaller than 0.2.

In the second embodiment, the composite oxide includes a second solid solution of a composite oxide, which has a perovskite structure represented by a general formula CDO₃, and Rh and/or Pt. Typically, the composite oxide 1 includes a composite oxide 11 having a perovskite structure represented by a general formula CD_{1-y-z}Rh_{y}Pt_{z}O₃. Further, the composite oxide 11 typically supports Rh and/or Pt as a precious metal 12a.

In the above general formula, the element C represents an alkaline-earth element, while the element D represents at least one element selected from the group consisting of Ti, Zr, Hf and Ce. The sum y+z of the values y and z is greater than 0 and smaller than 1. The sum y+z is, for example, smaller than 0.5, and typically smaller than 0.2.

The composite oxide catalyst 1 may be a mixture of the composite oxide including the first solid solution and the composite oxide including the second solid solution.

The refractory support 2 is a composite oxide support that supports the composite oxide catalyst 1. The supports 2 includes a first composite oxide having a spinel structure represented by a general formula EF₂O₄ or a second composite oxide represented by a general formula GAl₁₂O₁₉. In these general formulas, the element E represents an alkaline-earth element and/or a transition element, the element F represents at least one element selected from the group consisting of Al, Mg and transition elements, and the element G represents an alkaline-earth element.

The support 2 may be a mixture of the support including the first composite oxide and the support including the second composite oxide.

The exhaust gas-purifying catalyst exhibits a reversible change in state when a composition of an atmosphere is changed under high temperature conditions. This will be described with reference to FIG. 2.

FIG. 2 is a view schematically showing a state change that the exhaust gas-purifying catalyst shown in FIG. 1 exhibits under high temperature conditions. In FIG. 2, the state indicated as "Lean" shows the state that the exhaust gas-purifying catalyst exhibits when exposed to an atmosphere with a high oxygen concentration under high temperature conditions, for example, when the fuel supply to an engine is cut off. The state indicated as "Rich" shows the state that the exhaust gas-purifying catalyst exhibits when exposed to an atmosphere with a low oxygen concentration under high temperature conditions, for example, when an abundance of fuel is continuously supplied to an engine, for example.

The state indicated as "Lean" in FIG. 2 corresponds to the state described with reference to FIG. 1. Here, at least a part of the precious metal 12a may be oxidized; in other words, its oxidation number may be increased.

In this state, the precious metal 12a contributes to the activity of the exhaust gas-purifying catalyst, while the precious metal in the composite oxide 11 hardly contributes to the activity. However, during the period over which the exhaust gas-purifying catalyst is in the state indicated as "Lean", a concentration of offensive components such as nitrogen oxides, carbon monoxide, hydrocarbons, and the like in the exhaust gas, that is, an offensive component concentration in an atmosphere is relatively low. Thus, the exhaust gas-purifying catalyst delivers a sufficient performance.

When the oxygen concentration in the atmosphere is lowered under high temperature conditions, the exhaust gas-purifying catalyst causes a change from the state indicated as "Lean" to the state indicated as "Rich". Specifically, the precious metal 12b is precipitated out of the composite oxide 11.

During the period over which the exhaust gas-purifying catalyst is in the state indicated as "Rich", the offensive component concentration in the exhaust gas is relatively high. That is, during the period corresponding to the state indicated as "Rich", the exhaust gas-purifying catalyst is required to be higher in activity as compared to the period corresponding to the state indicated as "Lean".

The precious metal 12b is much smaller in size than the precious metal 12a. For example, the size of the precious metal 12a is several nanometers, while the size of the precious metal 12b is equal to or less than about 1 nm. Thus, the exhaust gas-purifying catalyst in the state indicated as "Rich" is higher in activity than the exhaust gas-purifying catalyst in the state indicated as "Lean". Therefore, the exhaust gas-purifying catalyst delivers a sufficient performance even when the offensive component concentration in the exhaust gas is high.

The exhaust gas-purifying catalyst in the state indicated as "Rich" causes a change to the state indicated as "Lean" when the oxygen concentration in the atmosphere increases under high temperature conditions. That is, the precious metal 12b and the composite oxide 11 form the solid solution. Note that precious metal 12a and 12b and the support 2 hardly form a solid solution.

As described above, the exhaust gas-purifying catalyst causes a reversible change in state. In addition, the exhaust gas-purifying catalyst forms the ultrafine precious metals 12b on the surfaces of the composite oxide 11 every time it causes the change from the state indicated as "Lean" to the state indicated as "Rich". Therefore, this state is recovered by the change from the state indicated as "Rich" to the state indicated as "Lean" and its reverse change. Since an automotive vehicle changes the oxygen concentration in the exhaust gas at relatively close intervals, the exhaust gas-purifying catalyst always exhibits a high activity to deriver a sufficient performance when exposed to a low oxygen concentration atmosphere at high temperatures.

Also, in the exhaust gas-purifying catalyst, the precious metal 12a contributes to the activity of the exhaust gas-purifying catalyst regardless of the composition of the atmosphere and temperature. Therefore, the exhaust gas-purifying catalyst delivers a sufficient performance not only when exposed to a high oxygen concentration atmosphere at high temperatures, but also when used for the first time or used under low temperature conditions.

Further, when the oxygen concentration in the atmosphere is increased under high temperature conditions, the exhaust gas-purifying catalyst makes the precious metal 12b and the composite oxide 11 form the solid solution as described above. Thus, the exhaust gas-purifying catalyst is low in the evaporation loss of the precious metal in the high oxygen concentration atmosphere.

When alumina, titania or silica is used in the refractory support 2, a reaction between the composite oxide catalyst 1 and the support 2 may occur under high temperature conditions of 1,000°C or higher.

For example, in the case where an exhaust gas-purifying catalyst whose composite oxide catalyst 1 contains a solid solution of a composite oxide having a perovskite structure represented by a chemical formula LaFeO₃ and Pd and whose support 2 is made of alumina is used under high temperature conditions of 1,000°C or higher, the above solid solution and alumina may react together to produce a composite oxide represented by a chemical formula LaAlO₃ and/or a composite oxide represented by a chemical formula LaAl₁₁O₁₈.

On the other hand, for example, in the case where an exhaust gas-purifying catalyst whose composite oxide catalyst 1 contains a solid solution of a composite oxide having a perovskite structure represented by a chemical formula CaTiO₃ and Rh and whose support 2 is made of alumina is used under high temperature conditions of 1,000°C or higher, the above solid solution and alumina may react together to produce a composite oxide represented by a chemical formula CaAl₂O₄ and/or a composite oxide represented by a chemical formula CaAl₄O₇. Similarly, in the case where an exhaust gas-purifying catalyst whose composite oxide catalyst 1 contains a solid solution of a composite oxide having a perovskite structure represented by a chemical formula CaZrO₃ and Pt and whose support 2 is made of alumina is used under high temperature conditions of 1,000°C or higher, the above solid solution and alumina may react together to produce a composite oxide represented by a chemical formula CaAl₂O₄ and/or a composite oxide represented by a chemical formula CaAl₄O₇.

The reaction of the composite oxide catalyst 1 with the support 2 means the decomposition of the composite oxide catalyst 1. Thus, when the reaction occurs, the activity of the exhaust gas-purifying catalyst decreases.

As described above, in the first and second embodiments, used is the support 2 that includes the first composite oxide having the spinel structure represented by the general formula EF₂O₄ or the second composite oxide represented by the general formula GAl₁₂O₁₉. This support 2 is less prone to cause the reaction with the composite oxide catalyst 1. Thus, each exhaust gas-purifying catalyst according to the first and second embodiments is less prone to cause a decrease in its activity even when used at high temperatures in an atmosphere whose oxygen concentration is high.

The exhaust gas-purifying catalysts can be manufactured, for example, by the following method.

In the case where the composite oxide catalyst 1 including the first solid solution is used, prepared first is a nonaqueous solution that contains an alkoxide of the element A, an alkoxide of the element B, and an organometallic complex containing palladium. Then, deionized water is dropped into the solution. Thus, a precipitate is produced as a hydrolysis product. A distillation under reduced pressure removes a nonaqueous solvent and water from the product to obtain a precursor of the composite oxide catalyst 1. Then, the precursor is dried, for example, at 60°C, and thereafter, subjected to a heat treatment in an oxidizing atmosphere, for example, at 800°C. Thus, the composite oxide catalyst 1 including the first solid solution is obtained.

In the case where the composite oxide catalyst 1 including the second solid solution is used, prepared first is a nonaqueous solution that contains an alkoxide of the element C and an alkoxide of the element D. Then, deionized water is dropped into the solution. Thus, a precipitate is produced as a hydrolysis product. Next, a nonaqueous solution is removed from the product by a distillation under reduced pressure so as to obtain slurry. Subsequently, an aqueous solution of a salt of Rh and/or a salt of Pt is added to the slurry, the resultant mixture is stirred, and then, water is removed therefrom by a distillation under reduced pressure. Thus, a precursor of the composite oxide catalyst 1 is obtained. Then, the precursor subjected to a heat treatment in an oxidizing atmosphere, for example, at 950°C to 1,000°C. Thus, the composite oxide catalyst 1 including the second solid solution is obtained.

In the case where the support including the first composite oxide is used, prepared first is an aqueous solution containing a salt of the element E and a salt of the element F. Then, a basic solution is dropped into the solution to cause precipitation. Thereafter, the aqueous solution containing the precipitate is stirred, and subsequently filtrated. Then, the filter cake is sufficiently washed using deionized water and dried, for example, at 110°C. The dried product is subjected to calcination in an oxidizing atmosphere, for example, at 600°C. The calcined product thus obtained is crushed using a mortar, and subjected to firing in an oxidizing atmosphere, for example, at 1,000°C. Thus, the support 2 including the first composite oxide is obtained.

In the case where the support including the second composite oxide is used, prepared first is an aqueous solution containing a salt of the element G and a salt of Al. Then, a basic solution is dropped into the solution to cause precipitation. Thereafter, the aqueous solution containing the precipitate is stirred, and subsequently filtrated. Then, the filter cake is sufficiently washed using deionized water and dried, for example, at 110°C. The dried product is subjected to calcination in an oxidizing atmosphere, for example, at 600°C. The calcined product thus obtained is crushed using a mortar, and subjected to firing in an oxidizing atmosphere, for example, at 1,300°C. Thus, the support 2 including the second composite oxide is obtained.

Next, the composite oxide catalyst 1 and the support 2 are mixed together. Further, the mixture is subjected to compression-molding, and if necessary, the molded product is crushed. The exhaust gas-purifying catalyst in the form of pellets is obtained by the above method.

The proportion of the composite oxide catalyst 1 in the mixture of the composite oxide catalyst 1 and the support 2 is set, for example, within a range of 1% to 99% by mass, and typically within a range of 20% to 80% by mass. In the case where the content regarding the composite oxide catalyst 1 is low, it is possible that a sufficient catalytic activity is not obtained. In the case where the content regarding the composite oxide catalyst 1 is high, it is possible that the sintering of the precious metal is prone to occur.

The proportion of the precious metal in the mixture of the composite oxide catalyst 1 and the support 2 is set, for example, within a range 0.01% to 10% by mass, and typically within a range of 0.1% to 5% by mass. In the case where the precious metal content is low, it is possible that a sufficient catalytic activity is not obtained. In the case where the precious metal content is high, it is possible that the sintering of the precious metal is prone to occur.

Although the case where the exhaust gas-purifying catalyst is a pellet catalyst is described as an example, the exhaust gas-purifying catalyst may take various forms. For example, the exhaust gas-purifying catalyst may be a monolith catalyst.

Examples of the present invention will be described below.

### (Example 1)

### <Preparation of composite oxide catalyst A1>

40.6g (0.1 mol) of lanthanum ethoxyethylate [La(OC₂H₄OC₂H₅)₃] and 30.7g (0.095 mol) of iron ethoxyethylate [Fe(OC₂H₄OC₂H₅)₃] were dissolved into 200 mL of toluene. The solution was mixed with a solution prepared by dissolving 1.52g (0.005 mol) of palladium acetylacetonate [Pd(CH₃COCHCOCH₃)₂] into 100 mL of toluene.

Then, 200 mL of deionized water was dropped into the mixed solution for about 15 minutes. Thus, a brown viscous precipitate was produced as a hydrolysis product. After stirring at room temperature for 2 hours, toluene and water were removed from the product by distillation under reduced pressure so as to obtain a precursor of a composite oxide catalyst.

Next, the precursor was dried at 60°C for 24 hours, and subsequently subjected to a heat treatment at 800°C in the atmosphere for 1 hour. Thus, dark brown powder was obtained.

Then, the measurement of diffraction spectrum utilizing an X-ray diffractometer was carried out on the powder thus obtained. As a result, it was proved that the powder was made of a composite oxide having a perovskite structure represented by a chemical formula LaFe_{0.95}Pd_{0.05}O₃. Hereinafter, the powder is referred to as a composite oxide catalyst A1.

Further, the specific surface area and the Pd content of the composite oxide catalyst A1 were measured. As a result, the specific surface area of the composite oxide catalyst A1 was 9.7 m²/g, and its Pd content was 2.17% by mass.

### <Preparation of refractory support B1>

Magnesium acetate [Mg(CH₃COO)₂·4H₂O] and aluminum nitrate [Al(NO₃)₃·9H₂O] were weighed such that the atomic ratio of magnesium to aluminum was 1:2 and were added to deionized water. Here, 107.2g of magnesium acetate and 375.1g of aluminum nitrate were added to 2,000 mL of deionized water.

After stirring sufficiently, an aqueous solution containing ammonium hydroxide was dropped into the aqueous solution at room temperature to cause coprecipitation. The aqueous solution containing the precipitate was stirred sufficiently and then filtrated. Note that the aqueous solution containing ammonium hydroxide was prepared by dissolving 70g of ammonia into 1,000 mL of deionized water.

The filter cake was sufficiently washed using deionized water and dried at 110°C. The dried material was subjected to calcination at 600°C for 3 hours in the atmosphere. The calcined material was crushed using a mortar and fired at 1,000°C for 5 hours in the atmosphere. Hereinafter, the powder thus obtained is referred to as a refractory support B1.

The measurement of diffraction spectrum utilizing an X-ray diffractometer was carried out on the refractory support B1. As a result, it was proved that the refractory support B1 was the spinel represented by the chemical formula MgAl₂O₄. Note that the specific surface area of the refractory support B1 was 38 m²/g.

### <Preparation of exhaust gas-purifying catalyst A1B1>

10g of the composite oxide catalyst A1 and 10g of the refractory support B1 were evenly mixed using a mortar. Next, the mixture was compression-molded. Further, the molded product was crushed so as to obtain an exhaust gas-purifying catalyst in the form of pellets with a particle diameter of about 0.5 mm to about 1.0 mm. Hereinafter, the exhaust gas-purifying catalyst is referred to as an exhaust gas-purifying catalyst A1B1.

### (Example 2)

### <Preparation of composite oxide catalyst A2>

15.8g (0.1 mol) of calcium isopropoxide [Ca(OC₃H₇)₂] and 27.0g (0.095 mol) of titan isopropoxide [Ti(OC₃H₇)₄] were dissolved into 200 mL of toluene. 200 mL of deionized water was dropped into the solution so as to produce a white viscous precipitate.

Then, toluene was removed from the product by distillation under reduced pressure to obtain slurry. Thereafter, an aqueous solution of rhodium nitrate was added to the slurry, and the slurry was stirred at room temperature for 1 hour. Note that the aqueous solution of rhodium nitrate was prepared by dissolving 1.44g (0.005 mol) of rhodium nitrate [Rh(NO₃)₃] into about 10 mL of deionized water.

Next, water was removed from the mixture by distillation under reduced pressure. Thus, a precursor of a composite oxide was obtained. Then, the precursor was subjected to a heat treatment at 950°C for 2 hours in the atmosphere. Thus, brown powder was obtained.

Then, the measurement of diffraction spectrum utilizing an X-ray diffractometer was carried out on the powder thus obtained. As a result, it was proved that the powder was made of a composite oxide having a perovskite structure represented by a chemical formula CaTi_{0.95}Rh_{0.05}O₃. Hereinafter, the powder is referred to as a composite oxide catalyst A2.

Further, the specific surface area and the Rh content of the composite oxide catalyst A2 were measured. As a result, the specific surface area of the composite oxide catalyst A2 was 9.3 m²/g, and its Rh content was 3.71% by mass.

### <Preparation of exhaust gas-purifying catalyst A2B1>

10g of the composite oxide catalyst A2 and 10g of the refractory support B1 were evenly mixed using a mortar. Next, the mixture was compression-molded. Further, the molded product was crushed so as to obtain an exhaust gas-purifying catalyst in the form of pellets with a particle diameter of about 0.5 mm to about 1.0 mm. Hereinafter, the exhaust gas-purifying catalyst is referred to as an exhaust gas-purifying catalyst A2B1.

### (Example 3)

### <Preparation of composite oxide catalyst A3>

15.8g (0.1 mol) of calcium isopropoxide [Ca(OC₃H₇)₂] and 31.1g (0.095 mol) of zirconium isopropoxide [Zr(OC₃H₇)₄] were dissolved into 200 mL of toluene. 200 mL of deionized water was dropped into the solution so as to produce a white viscous precipitate.

Then, toluene was removed from the product by distillation under reduced pressure to obtain slurry. Thereafter, 21.21g of an aqueous dinitrodiamine platinum nitrate solution containing 0.005 mol of Pt was added to the slurry, and it was stirred at room temperature for 1 hour.

Next, water was removed from the mixture by distillation under reduced pressure. Thus, a precursor of a composite oxide was obtained. Then, the precursor was subjected to a heat treatment at 1,000°C for 2 hours in the atmosphere. Thus, brown powder was obtained.

Then, the measurement of diffraction spectrum utilizing an X-ray diffractometer was carried out on the powder thus obtained. As a result, it was proved that the powder was made of a composite oxide having a perovskite structure represented by a chemical formula CaTi_{0.95}Pt_{0.05}O₃. Hereinafter, the powder is referred to as a composite oxide catalyst A3.

Further, the specific surface area and the Pt content of the composite oxide catalyst A3 were measured. As a result, the specific surface area of the composite oxide catalyst A3 was 35 m²/g, and its Pt content was 5.29% by mass.

### <Preparation of exhaust gas-purifying catalyst A3B1>

10g of the composite oxide catalyst A3 and 10g of the refractory support B1 were evenly mixed using a mortar. Next, the mixture was compression-molded. Further, the molded product was crushed so as to obtain an exhaust gas-purifying catalyst in the form of pellets with a particle diameter of about 0.5 mm to about 1.0 mm. Hereinafter, the exhaust gas-purifying catalyst is referred to as an exhaust gas-purifying catalyst A3B1.

### (Example 4)

### <Preparation of composite oxide catalyst A4>

31.6g (0.1 mol) of barium ethoxyethylate [Ba(OC₂H₄OEt)₂] and 38.7g (0.095 mol) of cerium ethoxyethylate [Ce(OC₂H₄OEt)₃] were dissolved into 200 mL of toluene. 200 mL of deionized water was dropped into the solution so as to produce a white viscous precipitate.

Then, toluene was removed from the product by distillation under reduced pressure to obtain slurry. Thereafter, 21.21g of an aqueous dinitrodiamine platinum nitrate solution containing 0.005 mol of Pt was added to the slurry, and it was stirred at room temperature for 1 hour.

Next, water was removed from the mixture by distillation under reduced pressure. Thus, a precursor of a composite oxide was obtained. Then, the precursor was subjected to a heat treatment at 950°C for 2 hours in the atmosphere. Thus, brown powder was obtained.

Then, the measurement of diffraction spectrum utilizing an X-ray diffractometer was carried out on the powder thus obtained. As a result, it was proved that the powder was made of a composite oxide having a perovskite structure represented by a chemical formula BaCe_{0.95}Pt_{0.05}O₃. Hereinafter, the powder is referred to as a composite oxide catalyst A4.

Further, the specific surface area and the Pt content of the composite oxide catalyst A4 were measured. As a result, the specific surface area of the composite oxide catalyst A4 was 12 m²/g, and its Pt content was 2.97% by mass.

### <Preparation of exhaust gas-purifying catalyst A4B1>

10g of the composite oxide catalyst A4 and 10g of the refractory support B1 were evenly mixed using a mortar. Next, the mixture was compression-molded. Further, the molded product was crushed so as to obtain an exhaust gas-purifying catalyst in the form of pellets with a particle diameter of about 0.5 mm to about 1.0 mm. Hereinafter, the exhaust gas-purifying catalyst is referred to as an exhaust gas-purifying catalyst A4B1.

### (Example 5)

### <Preparation of refractory support B2>

Strontium nitrate [Sr(NO₃)₂] and aluminum nitrate [Al(NO₃)₃·9H₂O] were weighed such that the atomic ratio of strontium to aluminum was 1:12 and were added to deionized water. Here, 21g (0.1 mol) of strontium nitrate and 450g (1.2 mol) of aluminum nitrate were added to 600 mL of deionized water.

After stirring sufficiently, an aqueous ammonium hydroxide solution containing 4.6 mol of ammonia was dropped into the aqueous solution at room temperature to cause coprecipitation. The aqueous solution containing the precipitate was stirred sufficiently and then filtrated.

Then, the filter cake was sufficiently washed using deionized water and dried at 110°C. The dried material was subjected to calcination at 600°C for 3 hours in the atmosphere. The calcined material thus obtained was crushed using a mortar and fired at 1,300°C for 1 hour in the atmosphere. Hereinafter, the powder thus obtained is referred to as a refractory support B2.

Next, the measurement of diffraction spectrum utilizing an X-ray diffractometer was carried out on the refractory support B2. As a result, it was proved that the refractory support B2 was a composite oxide represented by a chemical formula SrAl₁₂O₁₉. Note that the specific surface area of the refractory support B2 was 18 m²/g.

### <Preparation of exhaust gas-purifying catalyst A1B2>

10g of the composite oxide catalyst A1 and 10g of the refractory support B2 were evenly mixed using a mortar. Next, the mixture was compression-molded. Further, the molded product was crushed so as to obtain an exhaust gas-purifying catalyst in the form of pellets with a particle diameter of about 0.5 mm to about 1.0 mm. Hereinafter, the exhaust gas-purifying catalyst is referred to as an exhaust gas-purifying catalyst A1B2.

### (Comparative example 1)

### <Preparation of exhaust gas-purifying catalyst A1B3>

As a refractory support B3, prepared was alumina having a specific surface area of 90 m²/g. 10g of the composite oxide catalyst A1 and 10g of the refractory support B3 were evenly mixed using a mortar. Next, the mixture was compression-molded. Further, the molded product was crushed so as to obtain an exhaust gas-purifying catalyst in the form of pellets with a particle diameter of about 0.5 mm to about 1.0 mm. Hereinafter, the exhaust gas-purifying catalyst is referred to as an exhaust gas-purifying catalyst A1B3.

### (Comparative example 2)

### <Preparation of exhaust gas-purifying catalyst A3B3>

10g of the composite oxide catalyst A3 and 10g of the refractory support B3 were evenly mixed using a mortar. Next, the mixture was compression-molded. Further, the molded product was crushed so as to obtain an exhaust gas-purifying catalyst in the form of pellets with a particle diameter of about 0.5 mm to about 1.0 mm. Hereinafter, the exhaust gas-purifying catalyst is referred to as an exhaust gas-purifying catalyst A3B3.

Next, the endurance of these exhaust gas-purifying catalysts was tested by the following method.

First, each exhaust gas-purifying catalyst was set in a flow-type endurance test apparatus, and a gas containing nitrogen as a main component was made to flow through the catalyst bed at a flow rate of 1,000 mL/minute for 20 hours. During this period, the temperature of the catalyst bed was held at 1,050°C. As the gas made to flow through the catalyst bed, a lean gas and a rich gas were used, and these gases were switched at intervals of 5 minutes. Note that the lean gas was a gas prepared by first adding oxygen to nitrogen at a concentration of 5% and further adding water vapor to the mixed gas at a concentration of 10%, while the rich gas was a gas prepared by first adding carbon monoxide to nitrogen at a concentration of 10% and further adding water vapor to the mixed gas at a concentration of 10%.

Then, each exhaust gas-purifying catalyst was set in an atmospheric fixed bed flow reactor. Subsequently, the temperature of the catalyst bed was raised from 100°C to 500°C at the temperature increase rate of 12°C/minute and the exhaust gas-purifying ratio was continuously measured while a model gas was made to flow through the catalyst bed. As the model gas, the gas containing equivalent amounts of oxidizing components (oxygen and nitrogen oxides) and reducing components (carbon monoxide, hydrocarbons and hydrogen), which were adjusted stoichiometrically, was used. The results were shown in the table below.

| Exhaust gas-purifying catalyst | Composite oxide catalyst | Refractory support | 50% purifying temperature (°C) | |
|---|---|---|---|---|
| | | | HC | NOₓ |
| A1B1 | LaFe_{0.95}Pd_{0.05}O₃ | MgAl₂O₄ | 315 | 330 |
| A2B1 | CaTi_{0.95}Rh_{0.05}O₃ | MgAl₂O₄ | 325 | 335 |
| A3B1 | CaZr_{0.95}Pt_{0.05}O₃ | MgAl₂O₄ | 320 | 336 |
| A4B1 | BaCe_{0.95}Pt_{0.05}O₃ | MgAl₂O₄ | 330 | 345 |
| A1B2 | LaFe_{0.95}Pd_{0.05}O₃ | SrAl₁₂O₁₉ | 320 | 340 |
| A1B3 | LaFe_{0.95}Pd_{0.05}O₃ | Al₂O₃ | 375 | 400 |
| A3B3 | CaZr_{0.95}Pt_{0.05}O₃ | Al₂O₃ | 410 | 420 |

In the above table, the column denoted by "50% purifying temperature" shows the lowest temperature of the catalyst bed at which 50% or more of each component contained in the model gas was purified. The columns denoted by "HC" and "NOₓ" show the data for hydrocarbons and nitrogen oxides, respectively.

As shown in the table, the exhaust gas-purifying catalysts A1B1, A2B1, A3B1, A4B1 and A1B2 could purify the model gas at lower temperatures as compared to the exhaust gas-purifying catalysts A1B3 and A3B3. This result revealed that the exhaust gas-purifying catalysts A1B1, A2B1, A3B1, A4B1 and A1B2 were excellent in endurance as compared to the exhaust gas-purifying catalysts A1B3 and A3B3.

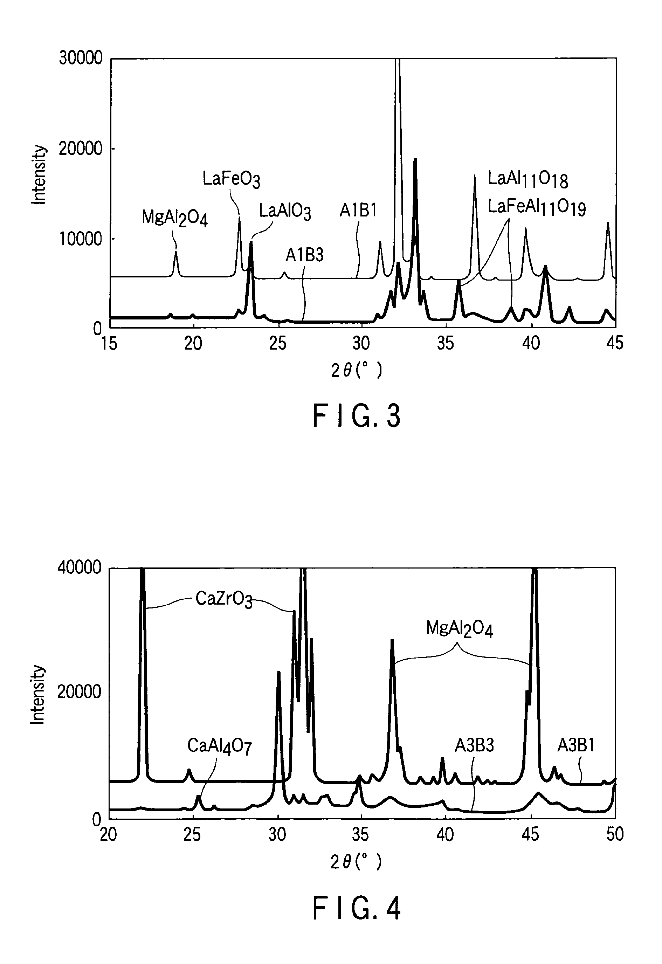

Next, measurements of diffraction spectrum utilizing an X-ray diffractometer were carried out on the exhaust gas-purifying catalysts A1B1 and A1B3 after the endurance test. The results are shown in FIG. 3.

FIG. 3 is a graph showing X-ray diffraction spectra of exhaust gas-purifying catalysts obtained after an endurance test. In the figure, the abscissa denotes the diffraction angle, while the ordinate denotes the detected intensity. Also, in the figure, the curve S_{A1B1} represents the X-ray diffraction spectrum obtained on the exhaust gas-purifying catalyst A1B1 after the endurance test, and the curve S_{A1B3} represents the X-ray diffraction spectrum obtained on the exhaust gas-purifying catalyst A1B3 after the endurance test.

The spectrum S_{A1B1} does not includes the peak originated from the reaction product of the composite oxide catalyst A1 and the refractory support B1. In contrast, the spectrum S_{A1B3} includes the peak originated from the reaction product of the composite oxide catalyst A1 and the refractory support B3, to be more specific, the composite oxides represented by the chemical formulas LaAlO₃, LaAl₁₁O₁₈ and LaFeAl₁₁O₁₉. Although not shown in the figure, both spectra obtained on the exhaust gas-purifying catalysts A1B1 and A1B3 before the endurance test do not includes the peak originated from the reaction product of the composite oxide A1 and the refractory support B1 and the peak originated from the reaction product of the composite oxide A1 and the refractory support B3.

As apparent from this, the decomposition of the composite oxide catalyst A1 occurred in the exhaust gas-purifying catalyst A1B3 by the endurance test so as to produce the composite oxides represented by the chemical formulas LaAlO₃, LaAl₁₁O₁₈ and LaFeAl₁₁O₁₉ as decomposition products. In contrast, in the exhaust gas-purifying catalyst A1B1, no decomposition of the composite oxide catalyst A1 was occurred by the endurance test.

Next, measurements of diffraction spectrum utilizing an X-ray diffractometer were carried out on the exhaust gas-purifying catalysts A3B1 and A3B3 after the endurance test. The results are shown in FIG. 4.

FIG. 4 is a graph showing X-ray diffraction spectra of exhaust gas-purifying catalysts obtained after an endurance test. In the figure, the abscissa denotes the diffraction angle, while the ordinate denotes the detected intensity. Also, in the figure, the curve S_{A3B1} represents the X-ray diffraction spectrum obtained on the exhaust gas-purifying catalyst A3B1 after the endurance test, and the curve S_{A3B3} represents the X-ray diffraction spectrum obtained on the exhaust gas-purifying catalyst A3B3 after the endurance test.

The spectrum S_{A3B1} does not includes the peak originated from the reaction product of the composite oxide catalyst A3 and the refractory support B1. In contrast, the spectrum S_{A3B3} includes the peak originated from the reaction product of the composite oxide catalyst A3 and the refractory support B3, to be more specific, the composite oxide represented by the chemical formula CaAl₄O₇. Although not shown in the figure, both spectra obtained on the exhaust gas-purifying catalysts A3B1 and A3B3 before the endurance test do not includes the peak originated from the reaction product of the composite oxide A3 and the refractory support B1 and the peak originated from the reaction product of the composite oxide A3 and the refractory support B3.

As apparent from this, the decomposition of the composite oxide catalyst A3 occurred in the exhaust gas-purifying catalyst A3B3 by the endurance test so as to produce the composite oxides represented by the chemical formulas CaAl₄O₇ as a decomposition product. In contrast, in the exhaust gas-purifying catalyst A3B1, no decomposition of the composite oxide catalyst A3 was occurred by the endurance test.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general invention concept as defined by the appended claims and their equivalents.

## Claims

1. An exhaust gas-purifying catalyst comprising:
a composite oxide catalyst comprising a first solid solution of a composite oxide having a perovskite structure represented by a general formula ABO₃ and Pd or a second solid solution of a composite oxide having a perovskite structure represented by a general formula CDO₃ and Rh and/or Pt; and
a composite oxide support supporting the composite oxide catalyst and comprising a first composite oxide having a spinel structure represented by a general formula EF₂O₄ or a second composite oxide represented by a general formula GAl₁₂O₁₉,
wherein the element A represents a rare-earth element, the element B represents a transition element, the element C represents an alkaline-earth element, the element D represents at least one element selected from the group consisting of Ti, Zr, Hf and Ce, the element E represents an alkaline-earth element and/or a transition element, the element F represents at least one element selected from the group consisting of Al, Mg and transition elements, and the element G represents an alkaline-earth element.

2. The exhaust gas-purifying catalyst according to claim 1, wherein the composite oxide support comprises the first composite oxide.

3. The exhaust gas-purifying catalyst according to claim 2, wherein the element E is Mg and the element F is Al.

4. The exhaust gas-purifying catalyst according to claim 1, wherein the composite oxide support comprises the second composite oxide.

5. The exhaust gas-purifying catalyst according to claim 4, wherein the element G is Sr.
